# EUROPEAN PATENT APPLICATION

(11) **EP 0 985 509 A1**
(43) Date of publication of application: **15.03.2000**
(21) Application number: 99108822.0
(22) Date of filing: 03.05.1999
(51) Int. Cl.: B29C 35/06

(54) **Method and apparatus for the curing of extruded sections on a bath of melted salts**

(30) Priority: 04.05.1998 IT MI980960
(71) Applicant: COLMEC S.p.A., 20020 Vanzaghello (Milano) (IT)
(72) Inventor: Colombo, Ubaldo, 21052 Busto Arsizio (Varese) (IT)
(74) Representative: Faggioni, Carlo Maria, Dr. Ing.

(57) **Abstract**

The present invention concerns a method, and the respective apparatus, for caring extruded sections formed of a curable rubber based material, of the type wherein, at the outlet of the extruder, the extruded section is moved forward onto a fluid bed of melted salts, over which it floats. According to the invention, the portion of the extruded section emerging above the melted salts is at least partially enclosed into a compartment, and is heated at a temperature between 20°C and 800°C without introducing any liquid substance into said compartment.

## Description

The present invention concerns a curing method for extruded sections formed of rubber based materials. In particular, it concerns a method, and the respective apparatus, for curing such sections on a bath of melted salts.

As known, the curing or vulcanization process substantially consists in heating, at a suitable temperature, a rubber based material so as to form, in its structure, particular molecular bonds apt to confer the required physical/mechanical properties on the finished product. Various rubber curing techniques exist in prior art, chosen on the basis of the special characteristics one wishes to obtain and of the composition of the product having to be cured.

The curing of extruded sections is normally carried out by adopting methods which respond to specific requirements, such as:
- the process must be continuous, following a substantially rectilinear long path, onto which the extruded section settles down as it comes out from the extruder die;
- the section should move forward, still at the plastic state, onto suitable transport means, without however being deformed thereby;
- the curing of the extruded section should be efficiently obtained both on the surface and in depth;
- the heating apparatus should be simple, efficient from the energetic point of view, and economic.

According to a technique adopted in the past, the extruded section is caused to slide along a sliding carpet - for example a set of parallel idle rollers - while being heated with hot air. This method however involves various negative aspects and has rapidly fallen out of use. In fact the extruded section, positioned onto the roller carpet still at the plastic state, tends to deform under its own weight even before the start of the curing process apt to confer thereon a proper mechnical strength. Furthermore, in the case of hollow sections (such as tubes), the hot air performs its action perfectly onto the outer surface of the section, but has difficulties in penetrating into the cavity.

To overcome such drawbacks, a method adopted at present provides for the curing to be performed in a bath of melted salts (mostly nitrites and potassium and sodium nitrates), at about 150-350°C, into which the extruded section is dipped and kept for a sufficiently long length to allow the whole curing to take place.

Also this system however involves some drawbacks.

In fact, since the rubber based materials have a specific weight below that of the melted salts bath, the extruded section tends to float over the melted salts, keeping uncovered a large portion rising above the floating line. According to known technique, this drawback is overcome by using dipping means - such as belts or rollers - which, being positioned just above the surface of the salts bath, force the extruded section coming out from the extruder die to plunge into the bath, keeping it dipped for the whole length thereof. With this method, however, the contact between the section, still at the plastic state, and the overlying rollers causes an undesired deformation of said section, especially in the case of sections having a complex profile.

An alternative method provides for the extruded section to be left freely floating and for the upper portion of the section, emerging from the bath of salts, to be constantly sprinkled with drops of melted salts, sprayed at the melting temperature. This method however involves high costs, as the curing plant is provided with suction and pumping pipes for the salts at the fluid state, as well as with a series of nozzles to spray the melted salt over the extruded section, which, besides being costly, require an accurate maintenance. Moreover, the melted salts need to be kept at a minimum temperature of about 150°C, to keep in a proper fluid state, and a maximum temperature of about 500°C, at which the salts tend to burn: this positively limits the range of temperatures having to be adopted, which in turn forms a limit for the control of the curing method.

The present invention allows to fully overcome the drawbacks of known technique. This object is reached with a method and an apparatus for curing extruded sections formed of a curable rubber based material - of the type wherein, at the outlet of the extruder, said extruded section is moved forward onto a fluid bed of melted salts, over which it floats - in which the portion of the extruded section emerging above the melted salts bath is at least partially enclosed into a compartment, and is heated at a temperature between 20°C and 800°C without introducing any liquid substance into said compartment.

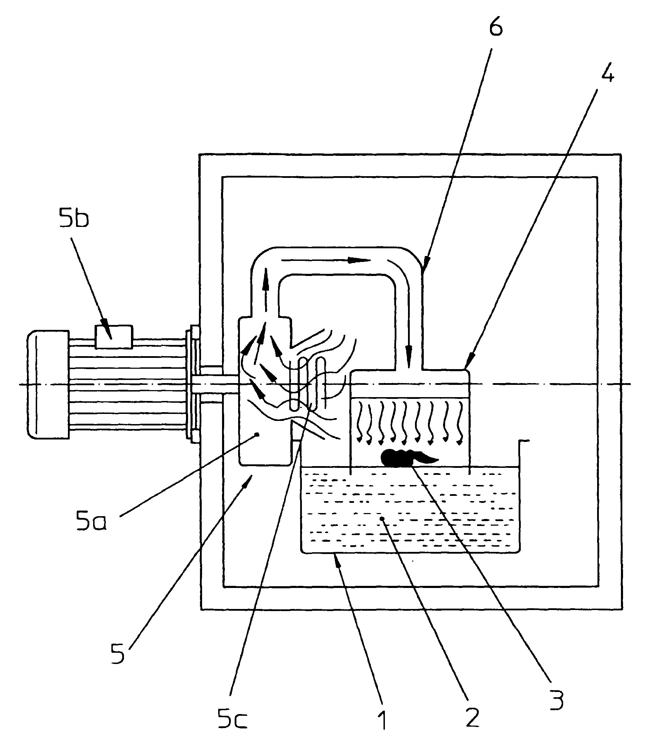

Other characteristics and advantages of the present invention will anyhow be more evident from the following detailed description of some preferred embodiments thereof, given by way of example, one of said embodiments being illustrated in detail on the accompanying drawing, which represents a diagrammatic sectional view of the apparatus according to the present invention.

A long tank 1 - of which the accompanying drawing shows a cross section - is positioned over a rectilinear path extending in front of the extrusion machine. The tank 1 contains a mass of salts 2, at the fluid state, melted at a temperature between 150°C and 350°C.

At the outlet of the extruder (not shown on the drawing) an extruded section 3 drops, at one end of the tank 1, over the bed of melted salts 2 and, floating thereon, it moves forward towards the other end of the tank 1.

According to the invention, a tunnel 4 is provided above the bed of melted salts 2, said tunnel opening at the bottom and forming a compartment apt to enclose the extruded section 3 and a volume around the same.

The volume in the compartment of the tunnel 4, possibly conditioned in a suitable manner, is used to heat the portion of the extruded section 3 emerging above the floating line, by means of a heating device 5 apt to transfer heat onto said section and cause it to reach the curing temperature, without requiring any dipping means to keep the extruded section 3 plunged into the bath of melted salts.

According to a preferred embodiment of the invention - shown on the drawing - the heating device 5 produces hot air at high temperature (adjustable between 20°C and 800°C), transferring it into the tunnel 4 through a pipe 6.

The device 5 consists of a variable speed fan 5a, operated by a metor 5b, and of heating means 5c, as for example a resistor, diathermic oil, or a gas burner. While the apparatus is at work, the device 5 draws ambient air, preferably close to the bath of melted salts 2, heats it with the means 5c, and finally introduces it into the tunnel 4 through the pipe 6.

This allows to create an overheated atmosphere around the extruded section 3, such as to cure also its portion which is not dipped into the bath of melted salts 2. When at least the superficial layer of the extruded section 3 has acquired its mechanical properties, it is possible - if desired - to make use of dipping means, according to known techniques, in order to fully plunge the extruded section 3 into the bath of melted salts 2 and complete the curing thereof.

A single continuous tunnel 4 can be provided along the length of the tank 1, or else various curing stations; likewise, a single heating device 5 can be adopted, with various heat distribution pipes 6, or else a certain number of heating devices can be distributed along the length of the tank 1.

According to a preferred embodiment, the tunnel 4 is adjustable in height, so as to be able to vary at will the volume enclosed therein, thereby providing a positive advantage as far as power efficiency. Preferably, the tunnel 4 is at least partially dipped into the bath of melted salts 2, to prevent the presence of lateral openings of hot air escape.

Moreover, the tunnel 4 can be closed at least at its far end, for instance by a panel, and possibly also at its end next to the extruder, for example by being drawn close to the die: this allows to totally seal the volume held in the tunnel 4, to the full advantage of the energetic yield. In this case, dipping means can be provided to force the extruded section 3 to totally plunge into the bath of melted salts 2, in correspondence of the end panel, so as to pass through beneath the same and emerge beyond the tunnel 4. The dipping means, though forcedly causing an interference, are not apt to modify the shape of the extruded section 3, in that they start to operate after the outer surface of said section has been properly cured, thereby acquiring a certain mechanical strength.

Finally, at the other end of the tank 1 - which is of suitable length, according to the curing temperature and to the extrusion speed - the extruded section 3 emerges in a fully cured condition and is cut into the wanted size.

According to a different embodiment of the invention, the tunnel 4 is used as a resonant chamber for a microwave source: in this case, the heating device 5 is a magnetron source (not shown). The microwaves exert a double heating action, both directly onto the portion of the extruded section 3 emerging above the floating line, heating it at the desired curing temperature, and onto the bath of melted salts 2, introducing heat which helps to keep the optimal temperature inside the bath.

The method and apparatus according to the present invention are also suited for curing extruded sections formed of a peroxy-rubber based material. In fact, to prevent the peroxy-rubber from getting in contact with an environment rich in oxygen, which prevents proper curing of the section 3, the volume around said section - thanks to the fact of being enclosed into the tunnel 4 - can be easily conditioned, for instance by being saturated with inert gases having a very low oxygen content. By "very low content" one means an amount perfectly known to a technician of the field, acquainted with the maximum oxygen contents allowed to obtain an optimal curing of each type of peroxy-rubber.

In this last case, if adopting the heating device 5 of the first illustrated embodiment, the high-temperature gas injection circuit does not make use of standard air, but of a suitable gas with low oxygen content. The gas injection circuit is preferably sealed.

The objects set forth in the premise have thus been reached. In particular, the curing method and apparatus supplied by the invention allow to carry out a treatment on the extruded section 3 without any invasive action, and to simultaneously guarantee low performance costs and simplicity of construction. In fact, since there is no treatment, at high temperature, of material at the fluid state (as in the case of the plant of prior art, wherein melted salts are sprinkled), it is no longer necessary to make use of complicated heating, pumping and spraying devices, which obviously involve higher costs and require an accurate maintenance. Finally, the temperature inside the tunnel 4 is adjustable within a wide range of temperatures, for example between 20°C and 800°C, since one is no longer tied to the working temperatures of the melted salts.

It is anyhow understood that the invention is not limited to the special embodiments described heretofore, which merely form non-limiting examples of its scope, but that a number of variants can be conceived, all within reach of a technician skilled in the art, without thereby departing from the scope of the present invention.

For example, further advantages could be achieved by using, in the same curing plant, both embodiments described heretofore, so as to optimize the working parameters of each heating device 5 on the basis of the respective technical features and of the specific energetic yield.

Finally, though reference has always been made to a tunnel 4 opening at the bottom, said tunnel could consist of a tube, having a suitably shaped cross section area, extending along the tank 1 and partially dipped into the bath of melted salts 2.

## Claims

1. Method for curing an extruded section formed of a curable rubber based material - of the type wherein, at the outlet of the extruder, said extruded section is moved forward onto a fluid bed of melted salts, over which it floats - characterized in that, the portion of the extruded section emerging above the melted salts bath is at least partially enclosed into a compartment, and is heated at a temperature between 20°C and 800°C without introducing any liquid substance into said compartment.

2. Method as in claim 1), wherein said portion of the extruded section emerging above the melted salts bath is heated by introducing gas at high temperature into said compartment.

3. Method as in claim 2), wherein said gas is standard air.

4. Method as in claim 2), wherein said gas is an inert gas with low oxygen content.

5. Method as in claim 1), wherein said portion of the extruded section emerging above the melted salts bath is heated by microwave irradiation, and wherein said compartment forms a resonant chamber for the microwaves.

6. Apparatus for the curing of an extruded section formed of a curable rubber based material - of the type comprising a tank containing a bath of salts melted at a temperature between 150°C and 350°C, over which said extruded section is moved forward by freely floating thereon, and a heating device apt to transfer heat at least onto a portion of the extruded section emerging above its floating line - characterized in that it also comprises a compartment, which is apt to at least partially enclose the extruded section and a volume around the same, and into which said heat is transferred by heat transfer means which do not involve the introduction of any liquid substance into said compartment.

7. Apparatus as in claim 6), wherein said heat transfer means consist of a high-temperature gas, and said heating device is a device to produce gas at high temperature.

8. Apparatus as in claim 7), wherein said high-temperature gas production device comprises gas heating means and a fan apt to introduce the high-temperature gas into said compartment.

9. Apparatus as in claim 8), wherein said gas heating means consist of a resistor.

10. Apparatus as in claim 8), wherein said gas heating means consist of diathermic oil.

11. Apparatus as in claim 8), wherein said gas heating means consist of a combustible gas burner.

12. Apparatus as in claim 6), wherein said heating device is a microwave source, and said compartment forms a resonant chamber for the microwaves.

13. Apparatus as in any one of claims 6) to 12), wherein said compartment is formed as a tunnel, the walls of which are in contact with the free surface of said melted salts bath.

14. Apparatus as in any one of claims 6) to 13), wherein said compartment is closed on all its sides, and is saturated with inert gas having a low oxygen content.

15. Apparatus as in any one of claims 6) to 14), wherein said compartment is adjustable in height.
